(19) Europäisches Patentamt / European Patent Office / Office européen des brevets

(11) EP 4 700 861 A1

(12) EUROPEAN PATENT APPLICATION
published in accordance with Art. 153(4) EPC

(43) Date of publication:
25.02.2026 Bulletin 2026/09

(51) International Patent Classification (IPC):
H01M 4/36 (2006.01)        H01M 4/38 (2006.01)
H01M 4/583 (2010.01)       C01B 32/205 (2017.01)
C01B 33/021 (2006.01)      H01M 10/0525 (2010.01)
H01M 4/02 (2006.01)

(21) Application number: 24792960.7

(22) Date of filing: 15.04.2024

(52) Cooperative Patent Classification (CPC):
Y02E 60/10

(86) International application number:
PCT/KR2024/005031

(87) International publication number:
WO 2024/219774 (24.10.2024 Gazette 2024/43)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 19.04.2023 KR 20230051290

(71) Applicant: Posco Future M Co., Ltd.
Pohang-si, Gyeongsangbuk-do 37918 (KR)

(72) Inventors:
• SHIN, Myoungsoo
  Cheongju-si, Chungcheongbuk-do 28165 (KR)

• LEE, Kyoungmuk
  Cheonan-si, Chungcheongnam-do 31207 (KR)
• KWON, Haejun
  Cheonan-si, Chungcheongnam-do 31197 (KR)
• AHN, Kihong
  Sejong 30153 (KR)
• LEE, Heon Young
  Asan-si, Chungcheongnam-do 31465 (KR)
• LEE, Dongue
  Asan-si, Chungcheongnam-do 31469 (KR)

(74) Representative: Meissner Bolte Partnerschaft mbB
Patentanwälte Rechtsanwälte
Postfach 86 06 24
81633 München (DE)

(54) ANODE ACTIVE MATERIAL FOR LITHIUM SECONDARY BATTERY, MANUFACTURING METHOD THEREFOR, AND LITHIUM SECONDARY BATTERY CONTAINING COMPRISING SAME

(57) The present invention relates to a negative electrode active material for a lithium secondary battery, comprising a mixture of a carbon-based active material and a silicon-based active material, wherein the shrinkage density at a compression pressure in the range of 700 to 1300 kgf/cm$^2$ is 0.80 g/cm$^3$ or more, and the shrinkage density is defined as a difference value between pellet density and tap density.

[Fig. 1]

EP 4 700 861 A1

## Description

### [Technical Field]

The present invention relates to a negative electrode active material for a lithium secondary battery, a method for manufacturing the same, and a lithium secondary battery including the same. More particularly, the present invention relates to a negative electrode active material for a lithium secondary battery comprising a carbon-based active material and a silicon-based active material, a method for manufacturing the same, and a lithium secondary battery including the same.

### [Background Art]

With the development of technologies for and the increasing demand for mobile devices, the demand for secondary batteries, which are rechargeable and capable of being miniaturized and increased in capacity, has rapidly increased. Recently, the use of secondary batteries as power sources for hybrid electric vehicles (HEVs) and electric vehicles (EVs) has become a reality. Accordingly, extensive research has been conducted on secondary batteries that can meet various requirements, and in particular, there has been a growing demand for lithium secondary batteries having high energy density, high discharge voltage, and high output. In addition, lithium secondary batteries used in electric vehicles and the like are required to have not only high energy density and high output characteristics capable of exhibiting large power in a short time, but also to be operable for ten years or more under harsh conditions where charging and discharging at high current are repeatedly performed in a short time. Therefore, far superior output characteristics and long cycle life performance are inevitably required compared to conventional small-sized lithium secondary batteries.

In particular, as the demand for high energy density batteries has recently increased, research has been actively conducted on methods for increasing capacity by using silicon-based materials such as Si/C or SiOx, which have a capacity more than ten times greater than that of graphite-based materials, as negative electrode active materials. However, although silicon-based materials having high capacity exhibit excellent capacity characteristics compared to conventional graphite, they suffer from a problem in which the volume rapidly expands during the charging process, resulting in disconnection of the conductive pathway and degradation of the battery performance, thereby deteriorating the cycle life characteristics of the battery.

Accordingly, there is a need for research on graphite and silicon-based mixed negative electrode active materials capable of appropriately ensuring both capacity and cycle life characteristics of a battery.

### [Detailed Description of the Invention]

### [Technical Problem]

In view of the above, an object of the present invention is to provide a mixed negative electrode active material comprising carbon-based and silicon-based active materials, which can improve both the capacity and cycle life characteristics of a lithium secondary battery, a method for manufacturing the same, and a lithium secondary battery including the same.

### [Technical Solution]

In one embodiment of the present invention, there is provided a negative electrode active material for a lithium secondary battery comprising a mixture of a carbon-based active material and a silicon-based active material, wherein the shrinkage density at a compression pressure in the range of 700 to 1300 $kgf/cm^2$ is 0.80 $g/cm^3$ or more, and the shrinkage density is defined as a difference value between pellet density and tap density.

The negative electrode active material for a lithium secondary battery may have a shrinkage density of 0.90 $g/cm^3$ or more at a compression pressure of 1000 $kgf/cm^2$.

The negative electrode active material for a lithium secondary battery may have a shrinkage density of 1.00 $g/cm^3$ or more at a compression pressure of 1300 $kgf/cm^2$.

The carbon-based active material may be natural graphite.

The carbon-based active material may have a sphericity of 0.87 or more.

The carbon-based active material may be oxidatively treated.

The silicon-based active material may be silicon.

The silicon-based active material may have a circularity of 0.931 or more.

The silicon-based active material may have a crystallite size of 175 nm or less.

The silicon-based active material may have a strain of $10 \times 10^{-5}$ or more.

The content of the silicon-based active material may be from 4 wt% to 6 wt% based on the total weight of the mixture.

In another embodiment of the present invention, there is provided a method for manufacturing a negative electrode active material for a lithium secondary battery, the method comprising:

preparing a carbon-based active material; performing first, second, and third pulverizing processes on a raw material of a silicon-based active material to prepare the silicon-based active material; and mixing the carbon-based active material and the silicon-based active material to form a mixture, wherein the negative electrode active material has a shrinkage density of 0.80 g/cm$^3$ or more at a compression pressure in the range of 700 to 1300 kgf/cm$^2$, and the shrinkage density is defined as a difference value between pellet density and tap density.

In the step of preparing the carbon-based active material, the carbon-based active material may be natural graphite.

In the step of preparing the carbon-based active material, the carbon-based active material may have a sphericity of 0.87 or more.

After the step of preparing the carbon-based active material, the method may further comprise thermally treating the prepared carbon-based active material under an air atmosphere to perform oxidation treatment.

The thermal treatment may be performed at a temperature of 500 °C to 700 °C.

The thermal treatment may be performed for 30 minutes to 6 hours.

In the step of forming the mixture, the content of the silicon-based active material may be from 4 wt% to 6 wt% based on the total weight of the mixture.

In still another embodiment of the present invention, there is provided a lithium secondary battery comprising a positive electrode, a negative electrode, an electrolyte, and a separator, wherein the negative electrode comprises the negative electrode active material described above.

**[Effects of the Invention]**

According to one embodiment of the present invention, the negative electrode active material for a lithium secondary battery includes a silicon-based active material in addition to a carbon-based active material, thereby not only improving the capacity of the battery but also minimizing deterioration in cycle life characteristics due to a sufficiently high shrinkage density.

**[Brief Description of the Drawings]**

FIG. 1 is a schematic diagram illustrating a negative electrode active material for a lithium secondary battery according to one embodiment of the present invention.

FIG. 2 is a graph showing the measurement results of shrinkage density of negative electrode active materials prepared according to Examples 1 to 3 and Comparative Examples 1 to 4.

FIG. 3 is a graph showing the results of cycle life characteristic evaluation of lithium secondary batteries prepared according to Examples 1 to 3 and Comparative Examples 1 to 4.

**[Mode for Carrying Out the Invention]**

The terms such as "first," "second," and "third" are used herein merely to describe various portions, components, regions, layers, and/or sections, and are not intended to be limited thereto. These terms are used only to distinguish one portion, component, region, layer, or section from another portion, component, region, layer, or section. Accordingly, a first portion, component, region, layer, or section described below may be referred to as a second portion, component, region, layer, or section without departing from the scope of the present invention.

The terminology used herein is intended only to describe particular embodiments and is not intended to limit the present invention. Singular forms used herein are intended to include plural forms as well, unless the context clearly indicates otherwise. The term "comprising" as used in the specification specifies the presence of stated features, regions, integers, steps, operations, elements, and/or components, but does not preclude the presence or addition of one or more other features, regions, integers, steps, operations, elements, and/or components.

When a portion is referred to as being "on" or "above" another portion, it may be directly on or above the other portion, or intervening portions may be present therebetween. In contrast, when a portion is referred to as being "directly on" or "directly above" another portion, it means that there are no intervening portions therebetween.

Unless otherwise defined, all technical and scientific terms used herein have the same meaning as commonly understood by one of ordinary skill in the art to which the present invention pertains. Terms defined in generally used dictionaries are to be interpreted as having a meaning consistent with their meaning in the relevant technical literature and the present disclosure, and are not to be interpreted in an idealized or overly formal sense unless explicitly defined otherwise.

Unless otherwise specified, the term "%" refers to weight percent (wt%), and 1 ppm refers to 0.0001 wt%.

In this specification, the expression "combinations thereof" described in a Markush-type expression means any mixture or combination of one or more selected from the group consisting of the components recited in the Markush-type expression, and includes any one or more of the components selected from the group.

Hereinafter, exemplary embodiments of the present invention will be described in detail so that those skilled in the art to which the invention pertains can readily carry out the invention. However, it should be understood that the present invention may be embodied in many different forms and should not be construed as being limited to the embodiments set forth herein.

## 1. Negative Electrode Active Material

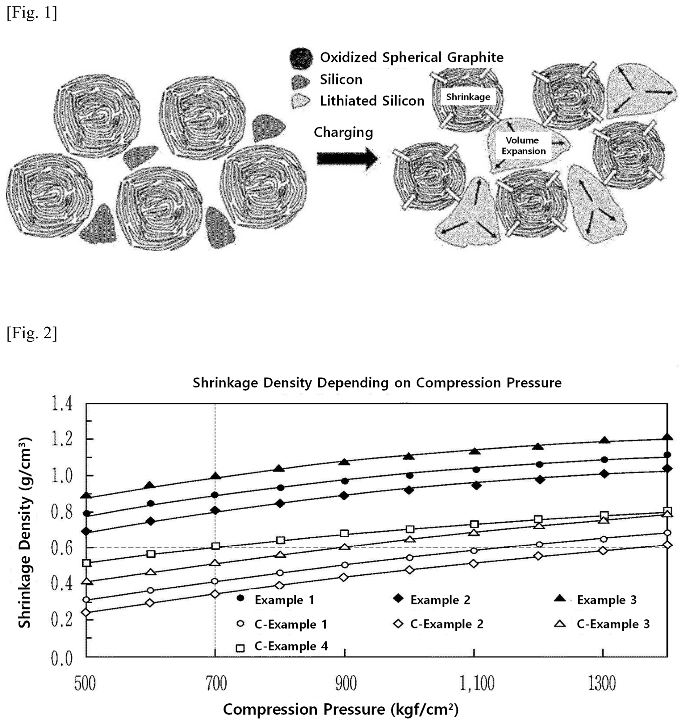

FIG. 1 is a schematic diagram illustrating a negative electrode active material for a lithium secondary battery according to one embodiment of the present invention. Hereinafter, referring to FIG. 1, a negative electrode active material for a lithium secondary battery according to one embodiment of the present invention will be described in detail.

In one embodiment of the present invention, there is provided a negative electrode active material for a lithium secondary battery comprising a mixture of a carbon-based active material and a silicon-based active material, wherein the shrinkage density at a compression pressure in the range of 700 to 1300 kgf/cm$^2$ is 0.80 g/cm$^3$ or more, and the shrinkage density is defined as a difference value between pellet density and tap density.

The negative electrode active material for a lithium secondary battery according to an embodiment of the present invention comprises a mixture of a carbon-based active material and a silicon-based active material. By further including a silicon-based active material having a capacity more than ten times greater than that of the carbon-based active material, the capacity characteristics of the battery can be improved. However, when the silicon-based active material is added, the electrode volume rapidly expands during charging, thereby breaking the conductive pathway and degrading the battery performance, which in turn causes significant deterioration in the cycle life characteristics during charge and discharge processes.

The inventors of the present invention have conducted extensive research on minimizing the deterioration of cycle life characteristics that occurs when a silicon-based active material is further included. As a result, it has been found that when the shrinkage density of the active material is sufficiently high, the volumetric expansion ratio of the electrode decreases, thereby improving the cycle life characteristics of the battery, and thus the present invention has been completed.

The negative electrode active material for a lithium secondary battery according to one embodiment of the present invention has a shrinkage density of 0.80 g/cm$^3$ or more at a compression pressure in the range of 700 to 1300 kgf/cm$^2$, and more specifically, 0.805 g/cm$^3$ or more or 0.81 g/cm$^3$ or more.

In this specification, the term "shrinkage density" is defined as a difference value between pellet density and tap density. Here, "pellet density" is defined as the density measured after applying a specific compression pressure to 2 g of active material powder placed in a circular mold having a diameter of 2 cm$^2$. As evident from this definition, the pellet density may vary depending on the applied compression pressure, and generally increases as the compression pressure increases. The "tap density" is defined according to ASTM-B527 as the density measured after placing 10 g of active material powder in a 50 mL container and tapping it at 3000 cycles at 284 cycles/min. Unlike the pellet density, the tap density has a constant value. The pellet density is greater than the tap density.

Because the negative electrode active material for a lithium secondary battery according to one embodiment of the present invention has a sufficiently high shrinkage density as described above, the carbon-based active material absorbs the pressure generated by the volumetric expansion of the silicon-based active material during charging and discharging of the negative electrode by contracting itself, thereby reducing the volumetric expansion ratio of the electrode during charge and discharge. Consequently, the cycle life characteristics of the battery can be improved.

More specifically, the negative electrode active material for a lithium secondary battery may have a shrinkage density of 0.80 g/cm$^3$, 0.805 g/cm$^3$, or 0.81 g/cm$^3$ or more at a compression pressure of 700 kgf/cm$^2$.

More specifically, the negative electrode active material for a lithium secondary battery may have a shrinkage density of 0.82 g/cm$^3$, 0.835 g/cm$^3$, or 0.85 g/cm$^3$ or more at a compression pressure of 800 kgf/cm$^2$.

More specifically, the negative electrode active material for a lithium secondary battery may have a shrinkage density of 0.86 g/cm$^3$, 0.875 g/cm$^3$, or 0.89 g/cm$^3$ or more at a compression pressure of 900 kgf/cm$^2$.

More specifically, the negative electrode active material for a lithium secondary battery may have a shrinkage density of 0.90 g/cm$^3$, 0.915 g/cm$^3$, or 0.92 g/cm$^3$ or more at a compression pressure of 1000 kgf/cm$^2$.

More specifically, the negative electrode active material for a lithium secondary battery may have a shrinkage density of 0.96 g/cm$^3$, 0.975 g/cm$^3$, or 0.98 g/cm$^3$ or more at a compression pressure of 1200 kgf/cm$^2$.

More specifically, the negative electrode active material for a lithium secondary battery may have a shrinkage density of 1.00 g/cm$^3$ or 1.01 g/cm$^3$ or more at a compression pressure of 1300 kgf/cm$^2$.

More specifically, the negative electrode active material for a lithium secondary battery may have a tap density of 0.80 to 0.95 g/cm$^3$.

The carbon-based active material may be natural graphite. When the carbon-based active material is natural graphite, the shrinkage density of the active material can be more easily implemented within the aforementioned numerical range, and accordingly, the improvement effect in battery performance can be more desirably achieved.

The carbon-based active material may have a sphericity of 0.87 or more. When the sphericity of the carbon-based active material satisfies the above range, the adhesion between the active material and the current collector can be improved, which provides advantages in the manufacturing process and can further enhance the capacity and output characteristics of the battery. In the present specification, the term "sphericity" refers to a numerical value representing the degree to which a particle is close to a spherical shape, which is defined as the ratio of the circumference of a circle having the same area as the projected shape of the particle to the actual perimeter of the particle's projected shape, measured using a flow-type particle analysis device. Such sphericity can be measured using an optical image acquisition analyzer (Fluid Imaging Technologies, FlowCam 8100) and analysis software (Visual Spreadsheet).

In particular, the carbon-based active material may be oxidatively treated. Conventionally, to improve the cycle life characteristics of a carbon-based active material, a low-crystallinity carbon material such as soft carbon or hard carbon has generally been coated on the surface of the carbon-based active material. However, the carbon-based active material according to the present invention may be oxidatively treated rather than being coated with a low-crystallinity carbon material. As the carbon-based active material undergoes oxidative treatment, its internal porosity increases and the rigidity (hardness) of graphite decreases. Consequently, a difference occurs between the density obtained by tapping the powder and the density obtained by compression, and this difference indicates that the contraction of the active material can absorb the expansion pressure generated during charging and discharging of the silicon material present in the mixture. Therefore, the shrinkage density of the active material can be more easily implemented within the aforementioned numerical range, and the improvement effect in battery performance can be more desirably achieved. In contrast, when the carbon-based active material is coated with a low-crystallinity carbon material, the shrinkage density of the active material cannot be easily obtained within the aforementioned range, making it unsuitable.

The silicon-based active material may be silicon particles. When the silicon-based active material is selected as silicon particles, the shrinkage density of the active material can be more easily implemented within the aforementioned numerical range, and accordingly, the improvement effect in battery performance can be more desirably achieved.

Meanwhile, the silicon-based active material may have a circularity of 0.931 or more. In this specification, the term "circularity" refers to a numerical value representing the degree to which a particle is close to a circular shape, defined as the ratio of the perimeter of a circle having an equivalent area to that of the particle's 2D image to the actual perimeter of the particle's 2D image, as analyzed through an image analysis device. This circularity can be measured using an optical image acquisition analyzer (Malvern Panalytical, Morphologi 4).

Furthermore, the silicon-based active material may have a crystallite size of 175 nm or less, and more specifically, 170 nm or less.

In the present specification, the term "crystallite size" refers to a value measurable by analyzing X-ray diffraction (XRD) data of a cross-section of the active material using the Rietveld refinement method. For example, the crystallite size may be obtained by performing X-ray diffraction analysis under the following conditions using a D8 Discover with GADDS XRD instrument (manufactured by Bruker) to acquire XRD data, and then processing the XRD data using the DIFFRAC.TOPAS program (manufactured by Bruker). In this case, the full width at half maximum (FWHM) is measured using the Caglioti equation.

**<X-ray Diffraction (XRD) Analysis Conditions>**

Radiation source: Cu target, 45 kV, 40 mA output, wavelength = 1.54 Å
Detector: GaliPIX3D
Sample preparation: Approximately 2 g of sample was loaded into a 2 cm-diameter holder mounted on a rotation stage.
Measurement time: Approximately 20 minutes
Measurement range: $2\theta = 10°\text{-}90°$

In addition, the silicon-based active material may have a strain of $10 \times 10^{-5}$ or more, and more specifically, $10.3 \times 10^{-5}$.

In the present specification, the term "strain" refers to a value measured through Rietveld refinement analysis of X-ray diffraction data, which represents the average deviation of the lattice spacing and indicates the degree of distortion of the crystal lattice, satisfying the following equation:

$$\varepsilon_0 = \frac{\Delta d}{d} = \frac{\beta_{FWHM(str)}}{4\tan\theta}$$

where $\beta_{FWHM(str)}$ denotes the full width at half maximum of the profile component associated with microstrain broadening.

When the circularity, crystallite size, and strain of the silicon-based active material satisfy the above ranges, the rigidity and volumetric expansion characteristics of the powder with respect to the compression pressure can be optimized, thereby enabling the shrinkage density of the active material to be more easily implemented within the aforementioned numerical range, and the corresponding improvement in battery performance can be more desirably achieved.

These various physical properties of the silicon-based active material can be easily obtained by performing a multi-stage pulverization process including first, second, and third pulverization steps on a raw material of the silicon-based active material during the manufacturing process. Details regarding this process will be described later in connection with the method for manufacturing the negative electrode active material.

The content of the silicon-based active material may be from 3 wt% to 7 wt% based on the total weight of the mixture, and more specifically, from 4 wt% to 6 wt%. When the content of the silicon-based active material satisfies the above range, the simultaneous improvement in both capacity and cycle life characteristics of the battery can be more desirably achieved. More specifically, if the content of the silicon-based active material is too low, the improvement effect on the capacity characteristics of the battery may be insignificant, whereas if the content is too high, the electrode expansion ratio during charge and discharge may become excessive, resulting in negligible improvement in cycle life characteristics.

The negative electrode active material may have an average particle diameter (D50) in the range of 10 to 30 $\mu$m. In this specification, the term "average particle diameter (D50)" is defined as the particle diameter corresponding to 50% of the cumulative volume in a particle size distribution curve. The average particle diameter (D50) may be measured, for example, by a laser diffraction method.

The negative electrode active material may have a specific surface area of 3 to 6 $m^2$/g. In this specification, the specific surface area of the active material can be measured for the active material powder using the Brunauer-Emmett-Teller (BET) method with a surface area and porosity analyzer (Micromeritics, ASAP2020).

When the average particle diameter and the specific surface area of the negative electrode active material satisfy the above ranges, the battery performance can be more desirably optimized.

## 2. Method for Manufacturing the Negative Electrode Active Material

In another embodiment of the present invention, there is provided a method for manufacturing a negative electrode active material for a lithium secondary battery, the method comprising: preparing a carbon-based active material; performing a first, a second, and a third pulverizing steps on a raw material of a silicon-based active material to prepare the silicon-based active material; and mixing the carbon-based active material and the silicon-based active material to form a mixture, wherein the negative electrode active material has a shrinkage density of 0.80 $g/cm^3$ or more at a compression pressure in the range of 700 to 1300 $kgf/cm^2$, and the shrinkage density is defined as a difference value between pellet density and tap density.

The method for manufacturing a negative electrode active material according to another embodiment of the present invention will now be described in more detail by step.

First, a carbon-based active material is prepared.

The carbon-based active material may be natural graphite. In this case, the carbon-based active material may be obtained through a spheroidization process. The spheroidization may be performed by a conventional method commonly used in the art for spheroidizing plate-shaped or flake-type carbon-based raw powder materials.

In particular, after the step of preparing the carbon-based active material, the method may further comprise thermally treating the prepared carbon-based active material under an air atmosphere to perform oxidation treatment. The technical significance of the oxidation treatment of the carbon-based active material has been described previously and will not be repeated here.

The thermal treatment may be performed at a temperature ranging from 500°C to 700°C, and more specifically, from 550°C to 650°C. When the thermal treatment temperature falls within the above range, the effects of the aforementioned oxidation treatment can be more desirably realized. More specifically, if the thermal treatment temperature is too low, the oxidation reactivity with oxygen may decrease, resulting in a reduced shrinkage density of the active material. Conversely, if the thermal treatment temperature is too high, a severe oxidation reaction may occur, leading to structural collapse of the spheroidized graphite and causing degradation of battery performance and increased cost due to low yield.

The thermal treatment may be performed for 30 minutes to 6 hours, and more specifically, for 1 hour to 5 hours.

When the thermal treatment time satisfies the above range, the effects of the aforementioned oxidation treatment can be more desirably achieved. More specifically, if the thermal treatment time is too short, the degree of oxidation of the natural graphite may be insufficient, resulting in limited pore formation and reduced ability to absorb the expansion of silicon, which may cause deterioration in battery cycle life. Conversely, if the thermal treatment time is too long, the active material may exhibit a high BET surface area, leading to increased slurry viscosity during electrode manufacturing, thereby reducing processability and yield, or may cause severe side reactions with the electrolyte, leading to deterioration in battery cycle characteristics.

Next, a raw material of the silicon-based active material is sequentially subjected to first, second, and third pulverization processes to prepare the silicon-based active material. By performing the first, second, and third pulverization processes, the circularity, crystallite size, and strain of the silicon-based active material can be adjusted to appropriate ranges, enabling the shrinkage density of the active material to be more desirably implemented.

More specifically, the raw material of the silicon-based active material may be metallurgical-grade silicon powder, which may contain 98 wt% or more of silicon and other impurities based on the total weight.

The first pulverization may be performed using any pulverization equipment conventionally used in the art without particular limitation. For example, the first pulverization may be performed using a jaw crusher, but is not limited thereto.

The second pulverization may also be performed using conventional pulverization equipment without particular limitation. For example, the second pulverization may be performed using one or more selected from a jet mill, ball mill, stirred media mill, roll mill, hammer mill, pin mill, disk mill, colloid mill, and atomizer mill, but is not limited thereto.

The second pulverization may be performed two or more times. By performing the second pulverization multiple times, the circularity and strain of the silicon-based active material can be further improved, and the crystallite size can be reduced, thereby maximizing the improvement in battery performance.

The third pulverization may be performed using any pulverization equipment conventionally used in the art without particular limitation. For example, the third pulverization may be performed using one or more selected from a jet mill, spiral jet mill, ball mill, stirred media mill, roll mill, hammer mill, pin mill, disk mill, colloid mill, and atomizer mill, but is not limited thereto.

Next, the carbon-based active material and the silicon-based active material are mixed to form a mixture. The resulting mixture, which constitutes the negative electrode active material according to the present invention, has a shrinkage density of 0.80 $g/cm^3$ or more at a compression pressure ranging from 700 to 1300 $kgf/cm^2$. The technical significance and detailed range of the shrinkage density of the negative electrode active material have been previously described and will not be repeated here.

In this case, the content of the silicon-based active material may be from 3 wt% to 7 wt% based on the total weight of the mixture, and more specifically, from 4 wt% to 6 wt%.

### 3. Lithium Secondary Battery

In another embodiment of the present invention, there is provided a lithium secondary battery comprising a positive electrode, a negative electrode, a separator, and an electrolyte, wherein the negative electrode comprises the negative electrode active material described above.

Additionally, the lithium secondary battery may optionally further include a battery case accommodating an electrode assembly of the positive electrode, negative electrode, and separator, and a sealing member for sealing the battery case.

The negative electrode may more specifically include a negative electrode current collector and a negative electrode active material layer disposed on the negative electrode current collector, wherein the negative electrode active material layer comprises the negative electrode active material for a lithium secondary battery described above.

The negative electrode current collector is not particularly limited as long as it possesses high conductivity without causing chemical changes in the battery. Examples include copper, stainless steel, aluminum, nickel, titanium, sintered carbon, or copper or stainless steel surface-treated with carbon, nickel, titanium, or silver, as well as aluminum-cadmium alloys. The negative electrode current collector typically may have a thickness of 3 to 500 $\mu$m, and, similar to the positive electrode current collector, fine irregularities may be formed on its surface to enhance the adhesion of the negative electrode active material. It may be used in various forms such as films, sheets, foils, nets, porous bodies, foams, or nonwoven fabrics.

The negative electrode active material layer may optionally include a binder and/or a conductive material together with the negative electrode active material.

The binder serves to improve adhesion between the particles of the negative electrode active material and between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more thereof may be used. The binder may be included in an amount of 1 to 30 wt% based on the total weight of the negative electrode active material layer.

The conductive material is used to impart electrical conductivity to the electrode and can be used without particular limitation as long as it exhibits electronic conductivity without causing chemical changes in the battery. Specific examples include graphite such as natural graphite or artificial graphite; carbon-based materials such as carbon black, acetylene black, ketjen black, channel black, furnace black, lamp black, thermal black, and carbon fibers; metal powders or metal fibers such as copper, nickel, aluminum, or silver; conductive whiskers such as zinc oxide and potassium titanate; conductive metal oxides such as titanium oxide; or conductive polymers such as polyphenylene derivatives, and mixtures of one or more thereof may be used. The conductive material may typically be included in an amount of 1 to 30 wt% based on the total weight of the negative electrode active material layer.

The negative electrode for a lithium secondary battery according to an embodiment of the present invention may be manufactured according to a conventional method for manufacturing a negative electrode, except that the negative electrode active material described above is used.

Specifically, the negative electrode may be manufactured by applying a composition for forming a negative electrode active material layer, which includes the aforementioned negative electrode active material and optionally a binder, conductive material, and solvent, onto the negative electrode current collector, followed by rolling and drying. In this case, the types and contents of the negative electrode active material, binder, and conductive material are as described above.

The solvent may be any solvent commonly used in the art, such as dimethyl sulfoxide (DMSO), isopropyl alcohol, N-methylpyrrolidone (NMP), acetone, or water, and one or more of these may be used individually or in combination. The amount of the solvent used may be sufficient to dissolve or disperse the negative electrode active material, conductive material, and binder, considering the coating thickness of the slurry and the manufacturing yield, and to provide a viscosity capable of exhibiting excellent coating thickness uniformity during electrode fabrication.

Alternatively, the negative electrode may be manufactured by casting the composition for forming the negative electrode active material layer onto a separate support, peeling off the resulting film, and laminating the film onto the negative electrode current collector.

The positive electrode may include a positive electrode current collector and a positive electrode active material layer disposed on the positive electrode current collector, and the positive electrode active material layer may include a positive electrode active material.

The positive electrode active material may be any material commonly used in the art without particular limitation.

The separator separates the positive electrode and the negative electrode and provides a pathway for lithium-ion movement. Any material commonly used as a separator in lithium secondary batteries may be employed without particular limitation, and it is particularly preferable that the separator exhibits low resistance to ionic movement of the electrolyte and excellent wettability with the electrolyte. Specifically, the separator may be a porous polymer film made of a polyolefin-based polymer such as an ethylene homopolymer, a propylene homopolymer, an ethylene/butene copolymer, an ethylene/hexene copolymer, or an ethylene/methacrylate copolymer, or a multilayer structure comprising two or more such layers. In addition, a conventional porous nonwoven fabric, for example, a nonwoven fabric made of high-melting-point glass fibers or polyethylene terephthalate (PET) fibers, may also be used. Furthermore, to ensure heat resistance or mechanical strength, a coated separator including ceramic components or polymer materials may also be employed, either as a single-layer or multilayer structure.

The electrolyte may be an organic liquid electrolyte, an inorganic liquid electrolyte, a solid polymer electrolyte, a gel-type polymer electrolyte, a solid inorganic electrolyte, or a molten inorganic electrolyte usable in the manufacture of lithium secondary batteries, but is not limited thereto.

Specifically, the organic liquid electrolyte may include an organic solvent and a lithium salt.

The organic solvent may be any solvent that can act as a medium through which ions involved in the electrochemical reactions of the battery can move, without particular limitation. Specific examples of the organic solvent include: ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitrile-based solvents such as R-CN (where R is a linear, branched, or cyclic hydrocarbon group having 2 to 20 carbon atoms and may include a double bond, an aromatic ring, or an ether bond); amide-based solvents such as dimethylformamide; dioxolane-based solvents such as 1,3-dioxolane; or sulfolane-based solvents.

Among these, carbonate-based solvents are preferable, and a mixture of a cyclic carbonate having high ionic conductivity and high dielectric constant (e.g., ethylene carbonate or propylene carbonate), which can enhance charge/discharge performance, and a linear carbonate compound having low viscosity (e.g., ethylmethyl carbonate, dimethyl carbonate, or diethyl carbonate) is more preferable. In this case, the cyclic carbonate and linear carbonate may be mixed at a volume ratio of about 1:1 to about 1:9 to provide excellent electrolyte performance.

The lithium salt may be any compound capable of supplying lithium ions used in lithium secondary batteries without particular limitation. Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_3SO_3)_2$, $LiN(C_2F_5SO_2)_2$, $LiN(CF_3SO_2)_2$, LiCl, LiI, and $LiB(C_2O_4)_2$. The concentration of the lithium salt is preferably within the range of 0.1 to 2.0 M. When the concentration of the lithium salt falls within the above range, the electrolyte exhibits appropriate conductivity and viscosity, providing excellent electrolyte performance and facilitating effective lithium-ion mobility.

In addition to the above components, the electrolyte may further include one or more additives to improve battery lifespan characteristics, suppress capacity degradation, or enhance discharge capacity. Examples of such additives include haloalkylene carbonate compounds such as difluoroethylene carbonate; pyridine; triethyl phosphate; triethanolamine; cyclic ethers; ethylenediamine; n-glyme; hexamethylphosphoramide; nitrobenzene derivatives; sulfur; quinone imine dyes; N-substituted oxazolidinones; N,N-substituted imidazolidines; ethylene glycol dialkyl ethers; ammonium salts; pyrrole; 2-methoxyethanol; or aluminum trichloride. The additive may be included in an amount of 0.1 to 5 wt% based on the total weight of the electrolyte.

Hereinafter, embodiments of the present invention will be described in greater detail through Examples. However, the following Examples are merely preferred embodiments of the present invention and are not intended to limit the invention in any way.

**Examples**

**Example 1**

(1) Preparation of Negative Electrode Active Material

*(Preparation of Carbon-Based Active Material)* Spheroidized natural graphite particles having an average particle diameter (D50) of 17 $\mu$m were subjected to thermal treatment in a continuous rotary kiln under an air atmosphere at 600°C for 3 hours to perform oxidation treatment, followed by classification using a 45 $\mu$m sieve.

*(Preparation of Silicon-Based Active Material)* Metallurgical-grade silicon powder was subjected to a first pulverization using a conventional pulverization apparatus. Subsequently, first and second secondary pulverizations were performed using other types of conventional pulverizing equipment. Thereafter, a third pulverization was conducted using a different pulverizing apparatus, and ultrasonic classification was carried out to obtain silicon particles.

*(Mixing)* The prepared carbon-based active material and silicon-based active material were mixed to form a mixture, wherein the content of the silicon-based active material was adjusted to 5 wt% based on the total weight of the mixture, thereby preparing the negative electrode active material.

(2) Fabrication of Negative Electrode

The prepared negative electrode active material, a binder of styrene-butadiene rubber (SBR), and a thickener of carboxymethyl cellulose (CMC) were mixed at a mass ratio of 98.0:1.0:1.0 (negative electrode active material:binder:thickener) and dispersed in deionized water to prepare a negative electrode slurry composition. The composition was coated onto a Cu-foil current collector, followed by drying and rolling under varying pressure conditions to obtain a negative electrode having an electrode density of 1.60 $\pm$ 0.05 $g/cm^3$.

(3) Fabrication of Lithium Secondary Battery

A coin-type half-cell (2032 type) was fabricated using the prepared negative electrode as a working electrode and metallic lithium as a counter electrode. A porous polypropylene film was interposed as a separator between the working electrode and the counter electrode, and the electrolyte was a solution of 1 M $LiPF_6$ dissolved in a mixed solvent of diethyl carbonate (DEC) and ethylene carbonate (EC) at a volumetric ratio of 7:3.

**Example 2**

A negative electrode active material and a lithium secondary battery were prepared in the same manner as in Example 1, except that in the preparation of the carbon-based active material, the natural graphite particles were thermally treated in a continuous rotary kiln under an air atmosphere at 600°C for 1 hour.

**Example 3**

A negative electrode active material and a lithium secondary battery were prepared in the same manner as in Example 1, except that in the preparation of the carbon-based active material, the natural graphite particles were thermally treated in a continuous rotary kiln under an air atmosphere at 600°C for 5 hours.

**Comparative Example 1**

A negative electrode active material and a lithium secondary battery were prepared in the same manner as in Example 1, except that the carbon-based active material was not oxidatively treated but instead coated with a low-crystallinity carbon material.

Specifically, the coating process was carried out as follows: natural graphite particles and petroleum pitch were mixed at a weight ratio of 100:5, and the mixture was mechanically blended using a high-speed stirrer at 2000 rpm for 10 minutes to obtain a uniform mixture. The resulting mixture was thermally treated under a nitrogen atmosphere at 1200°C for 5 hours, followed by classification using a 75 $\mu$m sieve.

**Comparative Example 2**

A negative electrode active material and a lithium secondary battery were prepared in the same manner as in Example 1, except that, instead of oxidation treatment, the natural graphite particles were mixed with petroleum pitch at a weight ratio of 100:8 and thermally treated.

**Comparative Example 3**

A negative electrode active material and a lithium secondary battery were prepared in the same manner as in Example 1, except that the natural graphite particles were not subjected to oxidation treatment.

**Comparative Example 4**

A negative electrode active material and a lithium secondary battery were prepared in the same manner as in Example 1, except that the second pulverization of the silicon-based active material was performed only once during the preparation step.

**Experimental Example 1: Evaluation of Physical Properties of Active Materials**

The physical properties of the negative electrode active materials prepared according to the Examples and Comparative Examples were evaluated, and the results are shown in Tables 1 and 2 and FIG. 2. The detailed experimental procedures are as follows.

(1) Evaluation of Sphericity of the Carbon-Based Active Material

The sphericity of the carbon-based active material powder was evaluated by calculating the ratio of the circumference of a circle having the same area as the projected shape of each particle to the actual perimeter of the particle's projected shape using a flow-type particle analysis device. The measurement was performed using an optical image acquisition analyzer (Fluid Imaging Technologies, FlowCam 8100) and analysis software (Visual Spreadsheet).

(2) Evaluation of Circularity of the Silicon-Based Active Material

The circularity of the silicon-based active material powder was evaluated by dividing the perimeter of the projected 2D image of each particle by the perimeter of a circle having an equivalent area. This circularity was measured using an optical image acquisition analyzer (Malvern Panalytical, Morphologi 4).

(3) Evaluation of Crystallite Size and Strain of the Silicon-Based Active Material

The crystallite size and microstrain (strain) of the silicon-based active material were measured by performing X-ray diffraction (XRD) using a D8 Discover with GADDS XRD instrument (manufactured by Bruker) and analyzing the obtained XRD data using the Rietveld refinement method implemented in Bruker's DIFFRAC.TOPAS program.

(4) Evaluation of Tap Density of the Active Material (Mixture)

The tap density of the mixed active material was measured in accordance with ASTM-B527 by placing 10 g of the active material powder in a 50 mL container and performing tapping at 3000 cycles at 284 cycles/min to determine the packing density.

(5) Evaluation of Shrinkage Density of the Active Material (Mixture)

Two grams of the active material powder were placed in a circular mold having a diameter of 2 cm$^2$, and compression pressures of 700 kgf/cm$^2$, 800 kgf/cm$^2$, 900 kgf/cm$^2$, 1000 kgf/cm$^2$, 1200 kgf/cm$^2$, and 1300 kgf/cm$^2$ were applied to measure the pellet density. The shrinkage density was then obtained by calculating the difference between the measured pellet density and the tap density.

(6) Evaluation of Particle Size of the Active Material (Mixture)

The particle size of the active material powder was measured using a laser diffraction method. In this case, D10, D50, D90, and Dmax represent the particle diameters corresponding respectively to 10%, 50%, 90%, and 100% of the cumulative volume in the particle size distribution curve. The SPAN value was calculated as (D90 - D10) / D50.

(7) Evaluation of Specific Surface Area of the Active Material (Mixture)

The specific surface area of the active material was measured using the Brunauer-Emmett-Teller (BET) method with a surface area and porosity analyzer (Micromeritics, ASAP2020).

[Table 1]

| Classification | Type of Carbon-Based Active Material | Surface Treatment Characteristics | Sphericity of Carbon-Based Active Material | Type of Silicon-Based Active Material | Circularity of Silicon-Based Active Material | Crystallite Size of Silicon-Based Active Material (nm) | Strain of Silicon-Based Active Material ($\times 10^{-5}$) | Tap Density of Active Material (g/cm$^3$) |
|---|---|---|---|---|---|---|---|---|
| Example 1 | Oxidized natural graphite | Oxidation for 3 h | 0.88 | Silicon | 0.931 | 168 | 10.5 | 0.89 |
| Example 2 | Oxidized natural graphite | Oxidation for 1 h | 0.89 | Silicon | 0.931 | 168 | 10.5 | 0.89 |
| Example 3 | Oxidized natural graphite | Oxidation for 5 h | 0.87 | Silicon | 0.931 | 168 | 10.5 | 0.89 |
| Comparative Example 1 | Coated natural graphite | 3% coating | 0.87 | Silicon | 0.931 | 168 | 10.5 | 1.10 |
| Comparative Example 2 | | 5% coating | 0.88 | Silicon | 0.931 | 168 | 10.5 | 1.05 |
| Comparative Example 3 | Natural graphite | Non-coated | 0.91 | Silicon | 0.931 | 168 | 10.5 | 0.97 |
| Comparative Example 4 | Oxidized natural graphite | Oxidation for 3 h | 0.88 | Silicon | 0.93 | 180 | 9 | 0.93 |

[Table 2]

| | Shrinkage Density Depending on Compression Pressure | | | | | |
|---|---|---|---|---|---|---|
| Compression Pressure (kg/cm$^2$) | 700 | 800 | 900 | 1000 | 1200 | 1300 |
| Example 1 | 0.89 | 0.93 | 0.97 | 1.00 | 1.06 | 1.09 |
| Example 2 | 0.81 | 0.85 | 0.89 | 0.92 | 0.98 | 1.01 |
| Example 3 | 0.99 | 1.03 | 1.07 | 1.10 | 1.16 | 1.19 |
| Comparative Example 1 | 0.41 | 0.46 | 0.51 | 0.54 | 0.62 | 0.65 |
| Comparative Example 2 | 0.34 | 0.39 | 0.44 | 0.47 | 0.55 | 0.58 |
| Comparative Example 3 | 0.51 | 0.56 | 0.61 | 0.64 | 0.72 | 0.75 |
| Comparative Example 4 | 0.61 | 0.64 | 0.66 | 0.70 | 0.75 | 0.78 |

[Table 3]

| | D10 ($\mu$m) | D50 ($\mu$m) | D90 ($\mu$m) | Dmax ($\mu$m) | SPAN | Specific Surface Area (BET) (m$^2$/g) |
|---|---|---|---|---|---|---|
| Example 1 | 9.6 | 18.0 | 31.2 | 73.4 | 1.20 | 4.95 |
| Example 2 | 9.5 | 17.8 | 29.0 | 62.0 | 1.10 | 4.10 |
| Example 3 | 9.8 | 18.2 | 32.1 | 74.0 | 1.23 | 4.45 |
| Comparative Example 1 | 10.4 | 18.1 | 27.6 | 61.7 | 0.95 | 1.68 |
| Comparative Example 2 | 10.8 | 19.0 | 28.6 | 62.0 | 0.94 | 1.81 |
| Comparative Example 3 | 9.4 | 18.4 | 29.7 | 52.0 | 1.1 | 4.41 |
| Comparative Example 4 | 9.7 | 18.2 | 32 | 74 | 1.23 | 4.96 |

Referring to Tables 1 to 3 and FIG. 2, it was confirmed that in Examples 1 to 3, where oxidatively treated graphite was used as the carbon-based active material and silicon particles, whose circularity, crystallite size, and strain were appropriately controlled through the first, second, and third pulverization processes, were used as the silicon-based active material, the shrinkage density was properly implemented within the target range.

In contrast, in Comparative Examples 1 to 3, where coated or non-coated natural graphite was used instead of oxidatively treated graphite as the carbon-based active material, the shrinkage density was found to be too low.

Furthermore, in Comparative Example 4, in which only a single secondary pulverization process was applied during the preparation of the silicon-based active material, the shrinkage density was also excessively low due to the reduced circularity, increased crystallite size, and decreased strain of the silicon material.

Experimental Example 2: Evaluation of Negative Electrode Volume Expansion Ratio

The volume expansion ratio of the negative electrode was evaluated after 30 charge-discharge cycles in the lithium secondary batteries fabricated according to the Examples and Comparative Examples, and the results are shown in Table 4 below.

More specifically, the thicknesses of the negative electrodes prepared according to the respective Examples and Comparative Examples were measured, and CR2032-type half-cells were fabricated. The cells were aged for 30 hours at 25°C prior to electrochemical testing.

For evaluation of expansion characteristics, charge-discharge tests were conducted under the following conditions: the specific capacity was set to 500 mAh/g, and the cells were charged at a constant current of 0.5 C to 5 mV, followed by constant-voltage charging until the current decreased to 0.005 C. After a rest period of 10 minutes, discharge was performed at a constant current of 0.5 C to 1.2 V, and this charge-discharge process was repeated for 30 cycles.

After completion of 30 cycles, the cells were disassembled, and the electrodes were washed with dimethyl carbonate (DMC) for 5 minutes. The electrode thickness was measured again, and the volume expansion ratio of the negative electrode was calculated according to the following Equation (1):

Volume Expansion Ratio (%) = {(Electrode thickness after 30 cycles - Initial electrode thickness)/(Initial electrode thickness)}×100     [Equation 1]

wherein the term *electrode thickness after 30 cycles* refers to the thickness of the negative electrode measured after disassembling the cell following 30 charge-discharge cycles, and the term *initial electrode thickness* refers to the thickness of the electrode prior to cell assembly.

[Table 4]

|  | Volume Expansion Ratio (%) |
|---|---|
| Example 1 | 41.6 |
| Example 2 | 42.5 |
| Example 3 | 38.4 |
| Comparative Example 1 | 46.8 |
| Comparative Example 2 | 50.6 |
| Comparative Example 3 | 44.9 |
| Comparative Example 4 | 43.8 |

Referring to Table 4, it was confirmed that the volume expansion ratio in Examples 1 to 3 was significantly lower than that in Comparative Examples 1 to 4. This result can be interpreted as being due to the shrinkage density of the negative electrode active material being controlled within an appropriate range, thereby effectively suppressing electrode expansion during repeated charge-discharge cycles.

**Experimental Example 3: Evaluation of Electrochemical Characteristics of the Battery**

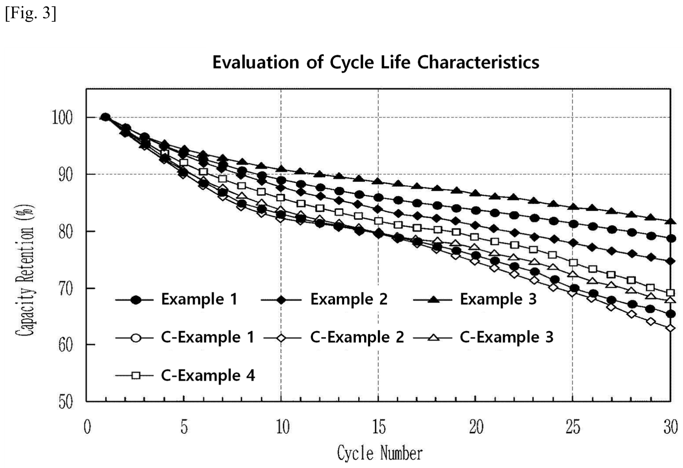

The electrochemical characteristics of the lithium secondary batteries manufactured according to the Examples and Comparative Examples were evaluated, and the results are shown in Table 5 and FIG. 3. The detailed experimental procedures are as follows.

(1) Evaluation of Initial Discharge Capacity and Initial Efficiency

After assembling CR2032-type half cells, the cells were aged for 30 hours at 25°C prior to testing. For evaluation of initial capacity, the specific capacity was set to 500 mAh/g, and charging was performed at a constant current of 0.1 C to 5 mV, followed by constant-voltage charging until the current decreased to 0.005 C. After a rest time of 10 minutes, discharging was performed at a constant current of 0.1 C to 1.0 V based on a specific capacity of 500 mAh/g.

(2) Evaluation of Cycle Life Characteristics

For evaluation of cycle life performance, the cell was charged at 0.5 C constant current to 5 mV, followed by constant-voltage charging until the current decreased to 0.005 C. After a rest time of 10 minutes, discharge was carried out at 0.5 C constant current to 1.2 V. This charge-discharge procedure was repeated for 30 cycles, and the capacity retention rate was calculated as the ratio of the discharge capacity at the 30th cycle to that at the first cycle.

[Table 5]

|  | Initial Discharge Capacity (mAh/g) | Initial Efficiency (%) | Cycle Life Characteristics (30 cycles, %) |
|---|---|---|---|
| Example 1 | 498.8 | 90.1 | 78.8 |
| Example 2 | 498.7 | 90.0 | 74.8 |
| Example 3 | 489.7 | 89.2 | 81.8 |
| Comparative Example 1 | 479.3 | 87.5 | 65.5 |
| Comparative Example 2 | 469.1 | 84.2 | 63.0 |
| Comparative Example 3 | 485.2 | 87.3 | 67.8 |

(continued)

| | Initial Discharge Capacity (mAh/g) | Initial Efficiency (%) | Cycle Life Characteristics (30 cycles, %) |
|---|---|---|---|
| Comparative Example 4 | 495.5 | 90.0 | 68.5 |

Referring to Table 5, it was confirmed that in Examples 1 to 3, the battery capacity and cycle life characteristics were significantly improved compared to Comparative Examples 1 to 4. This improvement can be interpreted as a result of the shrinkage density of the negative electrode active material being properly controlled within an appropriate range.

While the preferred embodiments of the present invention have been described above, it will be understood that the invention is not limited thereto, and various modifications, substitutions, and alterations can be made by those skilled in the art without departing from the spirit and scope of the invention as defined by the appended claims, the detailed description, and the accompanying drawings.

Accordingly, the true scope of the present invention should be defined by the appended claims and their equivalents.


**Claims**

1. A negative electrode active material for a lithium secondary battery, comprising a mixture of a carbon-based active material and a silicon-based active material, wherein the shrinkage density at a compression pressure in the range of 700 to 1300 $kgf/cm^2$ is 0.80 $g/cm^3$ or more, and the shrinkage density is defined as a difference value between pellet density and tap density.

2. The negative electrode active material for a lithium secondary battery of claim 1, wherein the shrinkage density at a compression pressure of 1000 $kgf/cm^2$ is 0.90 $g/cm^3$ or more.

3. The negative electrode active material for a lithium secondary battery of claim 1, wherein the shrinkage density at a compression pressure of 1300 $kgf/cm^2$ is 1.00 $g/cm^3$ or more.

4. The negative electrode active material for a lithium secondary battery of claim 1, wherein the carbon-based active material is a natural graphite.

5. The negative electrode active material for a lithium secondary battery of claim 1, wherein the carbon-based active material has a sphericity of 0.87 or more.

6. The negative electrode active material for a lithium secondary battery of claim 1, wherein the carbon-based active material is oxidatively treated.

7. The negative electrode active material for a lithium secondary battery of claim 1, wherein the silicon-based active material is a silicon particle.

8. The negative electrode active material for a lithium secondary battery of claim 1, wherein the silicon-based active material has a circularity of 0.931 or more.

9. The negative electrode active material for a lithium secondary battery of claim 1, wherein the silicon-based active material has a crystallite size of 175 nm or less.

10. The negative electrode active material for a lithium secondary battery of claim 1, wherein the silicon-based active material has a strain of $10 \times 10^{-5}$ or more.

11. The negative electrode active material for a lithium secondary battery of claim 1, wherein the content of the silicon-based active material is from 4 to 6 wt% based on the total weight of the mixture.

12. A method for manufacturing a negative electrode active material for a lithium secondary battery, comprising:

preparing a carbon-based active material;

sequentially performing a first, a second, and a third pulverizing processes on a raw material of a silicon-based active material to prepare the silicon-based active material; and

mixing the carbon-based active material and the silicon-based active material to form a mixture,

wherein the negative electrode active material has a shrinkage density of 0.80 g/cm$^3$ or more at a compression pressure in the range of 700 to 1300 kgf/cm$^2$, and the shrinkage density is defined as a difference value between pellet density and tap density.

13. The method for manufacturing a negative electrode active material for a lithium secondary battery of claim 12, wherein the carbon-based active material is natural graphite.

14. The method for manufacturing a negative electrode active material for a lithium secondary battery of claim 12, wherein the carbon-based active material has a sphericity of 0.87 or more.

15. The method for manufacturing a negative electrode active material for a lithium secondary battery of claim 12, further comprising a step of thermally treating the prepared carbon-based active material under an air atmosphere to perform oxidation treatment after preparing the carbon-based active material.

16. The method for manufacturing a negative electrode active material for a lithium secondary battery of claim 15, wherein the thermal treatment is performed at a temperature of 500 to 700 °C.

17. The method for manufacturing a negative electrode active material for a lithium secondary battery of claim 15, wherein the thermal treatment is performed for 1 to 5 hours.

18. The method for manufacturing a negative electrode active material for a lithium secondary battery of claim 12, wherein, in the step of forming the mixture, the content of the silicon-based active material is from 4 to 6 wt% based on the total weight of the mixture.

19. 20. A lithium secondary battery comprising a positive electrode, a negative electrode, an electrolyte, and a separator, wherein the negative electrode comprises the negative electrode active material for a lithium secondary battery according to any one of claims 1 to 11.

[Fig. 1]

[Fig. 2]

[Fig. 3]

## Evaluation of Cycle Life Characteristics

## INTERNATIONAL SEARCH REPORT

International application No.

**PCT/KR2024/005031**

### A. CLASSIFICATION OF SUBJECT MATTER

**H01M 4/36**(2006.01)i; **H01M 4/38**(2006.01)i; **H01M 4/583**(2010.01)i; **C01B 32/205**(2017.01)i; **C01B 33/021**(2006.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01B 32/15(2017.01); C01B 32/168(2017.01); H01M 10/052(2010.01); H01M 10/0567(2010.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극활물질(anode active material), 탄소(carbon), 규소(silicone), 이차전지 (secondary battery), 밀도(density), 구형화(spherification)

### C. DOCUMENTS CONSIDERED TO BE RELEVANT

| Category* | Citation of document, with indication, where appropriate, of the relevant passages | Relevant to claim No. |
|---|---|---|
| X | JP 2017-062974 A (TOKAI CARBON CO., LTD.) 30 March 2017 (2017-03-30) See claims 1, 4, 6 and 10, and paragraphs [0016], [0063], [0107] and [0122]. | 1-5,7,8,11,19 |
| Y | | 6,9,10,12-18 |
| Y | KR 10-2019-0007245 A (SAMSUNG SDI CO., LTD.) 22 January 2019 (2019-01-22) See claim 7, and paragraph [0037]. | 6,15-17 |
| Y | KR 10-2018-0117583 A (SAMSUNG ELECTRONICS CO., LTD.) 29 October 2018 (2018-10-29) See paragraphs [0041] and [0055]. | 9,10,12-18 |
| A | KR 10-2022-0067594 A (DAE JOO ELECTRONIC MATERIALS CO., LTD.) 25 May 2022 (2022-05-25) See claims 1, 4, 12 and 13. | 1-19 |

☑ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 July 2024** | **22 July 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/005031** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2019-0085942 A (MITSUBISHI CHEMICAL CORPORATION) 19 July 2019 (2019-07-19)<br>    See claims 1, 3 and 4. | 1-19 |

Form PCT/ISA/210 (second sheet) (July 2022)

## INTERNATIONAL SEARCH REPORT
### Information on patent family members

International application No.

**PCT/KR2024/005031**

| Patent document cited in search report | | | Publication date (day/month/year) | Patent family member(s) | | | Publication date (day/month/year) |
|---|---|---|---|---|---|---|---|
| JP | 2017-062974 | A | 30 March 2017 | None | | | |
| KR | 10-2019-0007245 | A | 22 January 2019 | CN | 111066180 | A | 24 April 2020 |
| | | | | CN | 111066180 | B | 15 July 2022 |
| | | | | KR | 10-2487626 | B1 | 12 January 2023 |
| | | | | US | 11515520 | B2 | 29 November 2022 |
| | | | | US | 2020-0152970 | A1 | 14 May 2020 |
| | | | | WO | 2019-013525 | A2 | 17 January 2019 |
| | | | | WO | 2019-013525 | A3 | 11 April 2019 |
| KR | 10-2018-0117583 | A | 29 October 2018 | CN | 104781958 | A | 15 July 2015 |
| | | | | CN | 104781958 | B | 29 March 2019 |
| | | | | EP | 2940760 | A1 | 04 November 2015 |
| | | | | EP | 2940760 | B1 | 21 February 2018 |
| | | | | JP | 2016-509739 | A | 31 March 2016 |
| | | | | KR | 10-1927414 | B1 | 10 December 2018 |
| | | | | KR | 10-1939270 | B1 | 16 January 2019 |
| | | | | US | 10586978 | B2 | 10 March 2020 |
| | | | | US | 2015-0270536 | A1 | 24 September 2015 |
| | | | | US | 2017-0338477 | A1 | 23 November 2017 |
| | | | | US | 2017-0338478 | A1 | 23 November 2017 |
| | | | | US | 9761869 | B2 | 12 September 2017 |
| | | | | US | 9911976 | B2 | 06 March 2018 |
| | | | | WO | 2014-104842 | A1 | 03 July 2014 |
| KR | 10-2022-0067594 | A | 25 May 2022 | CN | 116724414 | A | 08 September 2023 |
| | | | | EP | 4246622 | A1 | 20 September 2023 |
| | | | | JP | 2023-549256 | A | 22 November 2023 |
| | | | | KR | 10-2512804 | B1 | 24 March 2023 |
| | | | | TW | 202226652 | A | 01 July 2022 |
| | | | | TW | I820513 | B | 01 November 2023 |
| | | | | US | 2023-0420651 | A1 | 28 December 2023 |
| | | | | WO | 2022-103038 | A1 | 19 May 2022 |
| KR | 10-2019-0085942 | A | 19 July 2019 | CN | 109997257 | A | 09 July 2019 |
| | | | | CN | 109997257 | B | 12 December 2023 |
| | | | | CN | 115863618 | A | 28 March 2023 |
| | | | | JP | 7192499 | B2 | 20 December 2022 |
| | | | | KR | 10-2449293 | B1 | 29 September 2022 |
| | | | | US | 11183679 | B2 | 23 November 2021 |
| | | | | US | 2019-0312257 | A1 | 10 October 2019 |
| | | | | WO | 2018-097213 | A1 | 31 May 2018 |

Form PCT/ISA/210 (patent family annex) (July 2022)